# EUROPEAN PATENT APPLICATION

(11) **EP 4 597 069 A1**
(43) Date of publication of application: **06.08.2025**
(21) Application number: 24154810.6
(22) Date of filing: 30.01.2024
(51) Int. Cl.: G01N 1/06, G01N 35/00

(54) **DEVICE FOR CUTTING SLICES OF A SAMPLE AND METHOD TO OPERATE SUCH A DEVICE**

(71) Applicant: LEICA Mikrosysteme GmbH, 1170 Wien (AT)
(72) Inventor: Katzengruber, Matthias, 1170 Wien (AT); Kellermann, Peer Oliver, 1170 Wien (AT)
(74) Representative: Paustian & Partner Patentanwälte mbB

(57) **Abstract**

A first aspect of the present disclosure is related to a device for cutting slices of a sample, comprising:
- a sample holder configured to hold a sample to be cut and to move the sample in one or more directions ;
- a blade holder configured to move a blade in one or more directions to cut the sample;

wherein the device is configurable or configured to:
- move the sample holder relatively to the blade holder in a first movement that comprises a phase in which the sample is cut by the blade; and
- move the sample holder relatively to the blade holder in a second movement that comprises a retreat phase in which the sample holder is moved away from and/or to the blade;

wherein both movements are executed to cut the sample in a pre-defined direction; and
wherein the device indicates if the device is in the retreat phase.

## Description

### Technical Field

This disclosure is related to devices for cutting samples such as microtomes and to methods to operate devices for cutting samples.

### Background

A microtome is a specialized tool used in laboratories for cutting extremely thin slices of material of samples and is primarily used in histology to study the microscopic structure of tissues. The instrument uses a sharp blade to slice thin sections of material, typically ranging from a few nanometers to a few micrometers in thickness. Microtomes can be manual, where the user mechanically controls the slicing motion, or mechatronic, where the movement is motorized. The extremely sharp blade can be sensitive to improper use. For example, if a slice is cut too thick, a blade can be damaged. Improvements for these and similar situations are desirable.

### Summary

An object of the present disclosure is to improve a device for cutting samples, such as a microtome.

This object is solved by the disclosed embodiments, which are defined in particular by the subject matter of the independent claims. The dependent claims provide information for further embodiments. Various aspects and embodiments of these aspects are also disclosed in the summary and description below, which provide additional features and advantages.

A first aspect of the present disclosure is related to a device for cutting slices of a sample,
comprising:
- a sample holder configured to hold a sample to be cut and to move the sample in one or more directions ;
- a blade holder configured to move a blade in one or more directions to cut the sample;

wherein the device is configurable or configured to:
   - move the sample holder relatively to the blade holder in a first movement that comprises a phase in which the sample is cut by the blade; and
   - move the sample holder relatively to the blade holder in a second movement that comprises a retreat phase in which the sample holder is moved away from and/or to the blade;
wherein both movements are executed to cut the sample in a pre-defined direction; and
wherein the device indicates if the device is in the retreat phase.

A device for cutting slices can be used in the study of the microscopic structures of tissues, e.g. biological tissues, and/or other material. They can be used for cutting from a sample one or more slices thin enough to be translucent, so that they can be examined in detail under a microscope.

A sample can be any piece of material or of different materials that can be sliced. A sample can include biological tissues from various organs, useful in diagnosing diseases and conducting research, as well as plant materials for studying plant anatomy. Animal tissues are often prepared for scientific studies, and human biopsy samples are crucial in identifying conditions like cancer. In materials science, various substances can be sliced in thin layers, such as polymers, for microstructural analysis. Cryomicrotomes are used for rapid pathological examination of frozen sections during surgeries. Additionally, cultured cells and hard tissues like bones can also be sliced. The intended thickness of a slice can vary from millimeters to a few micrometers. block face

A microtome can be a rotary microtome suitable for cutting thinner sections of tissue. A microtome can also be a cryomicrotome suitable for cutting frozen samples. This can be useful in preparing specimens/samples for research in biology and/or medicine. A microtome can also be an ultramicrotome suitable for cutting ultra-thin sections for electron microscopy. A microtome can also be a laser microtome suitable to use a laser to cut samples in non-contact manner.

The device can be configurable to move a sample holder and a blade holder relatively to each other. This can be implemented by moving the sample holder only, by moving the blade holder only (i.e. the sample holder is fix), and/or by moving the sample holder and the blade holder. Therefore, the first movement and/or the second movement can be realized by the sample holder, by the device holder or by both parts of the device.

A sample holder, also known as a chuck or specimen holder, can be used to securely positioning the sample for slicing. A sample holder can be designed to firmly hold the sample in the correct orientation, allowing for precise and consistent slices. A sample holder can be adjustable, enabling alignment of the sample with the cutting blade to achieve the desired sectioning angle and thickness. Such an adjustment can be configurable independent of a first and a second movement, e.g. by a manual slider. A sample holder can comprise temperature control features, e.g. in cryomicrotomes for maintaining low temperatures.

A blade holder can be a component specifically designed to securely mount and position a blade of a cutting device, i.e. a blade. It can play a vital role in ensuring precise and accurate slicing of samples. A blade holder can be configured to allow for adjustments in various axes, enabling a user and/or a method to align the blade correctly in relation to the sample. This may be important for achieving a desired thickness and quality of sections. A blade holder can be compatible with different types of blades, including disposable and reusable ones, and is crafted to withstand the rigors of sectioning while maintaining stability. A blade to be arranged in or on the blade holder may be of metal, in particular steel, glass and/or diamond.

A retreat phase can be a phase realized only by a second movement. A retreat phase can be a phase of a second movement in which the sample cannot be cut by the blade because the sample holder is too far away from the blade holder or from the blade. In a retreat phase, the sample holder may be distanced safely from the blade holder, such that no operation harmful to a blade can be commanded. A movement into a retreat phase can be small, e.g., 200µm - 300µm. Hence, a second movement can be of a similar scale. However, such a movement can also be larger.

By a retreat phase it can be assured in particular that a cut is performed always in the same direction, e.g. from above through the sample (and a counter directional movement is performed within the retreat phase). Therefore, a superposition of a first movement and of a second movement is performed such that a blade only cuts a sample if it moves in a pre-defined cut direction (e.g. from a point above a sample to a point below a sample). This may be important because cuts from another direction could damage a blade in the blade holder. This sensitivity of a blade may be due to a sharpening for very thin slices (up to a few micrometer). Furthermore, damages of blades configured for very thin cuts can be costly and time consuming, as the blade needs to be de-installed and sent to a company specialized in blade-sharpening.

An indication of a retreat phase can be done in different ways as will be explained in the remainder. By indicating a retreat phase a device, in particular a blade, can be protected from damages. A damage can in particular occur if a device is in a retreat phase and a sample holder and/or a blade holder are manually repositioned without considering that the device is in the retreat phase. In this case, a user might start cutting with the device and performs a cut that exceeds a maximum cut thickness of a blade (0,2mn - 2mn), which may also cause damage to the blade. In particular a novice user might stop the device in a retreat phase. If another (novice) user who wants to use the device afterwards and adjusts the blade closer to the material holder without recognizing the device being in the retreat phase, the user prevents the protective function of the retreat phase, and the above-described problem may occur.

An embodiment of the first aspect is related to a device for cutting slices of a sample,
wherein the sample holder is configured to be actuated manually and/or electrically and thereby to perform the first movement and/or the second movement.

A sample holder can be moved in several ways to facilitate the precise cutting of samples. A sample holder can be moved vertically, horizontally and/or rotationally. A retractional movement (for a retreat phase) can comprise one or more of these principal movements. One or more of these movements can be performed manually or automatically.

Manual movements require a user to physically adjust the sample holder. A manual movement can be commanded by a command element such as a turning wheel, a slider, or a screw. The sample holder may have a command element for any of its possible movements. Additionally or alternatively, a command element may be configured to command a first movement and/or a second movement. For example, a turning wheel can be configured to move the sample holder in a first direction and in a second direction, i.e. by moving the turning wheel the first movement and the second movement are commanded in a pre-defined way, e.g. such that the blade holder performs an elliptical movement relative to a fix blade. The coupling of the first and the second movement can be implemented e.g. by an eccentric tappet.

Additionally or alternatively, one or more of these movements can be controlled by one or more motors, in particular servo motors. In one embodiment a mechanical control element, e.g. a turning wheel, may be used to command a first and/or a second movement in the same way as described above. This allows in particular more flexibility in coupling a first to a second movement.

An embodiment of the first aspect is related to a device for cutting slices of a sample,
wherein the second movement is essentially perpendicular to the first movement.

For example, a device according to the first aspect can be configured to perform a first movement in a vertical direction relative to a blade of the device. Then the device can also be configured to perform a second movement in a horizontal direction. By arranging the first movement and the second movement perpendicular to each other, independent movements are performed, and a device can be moved to a retreat phase independent of the position within the first movement.

An embodiment of the first aspect is related to a device for cutting slices of a sample,
wherein the second movement is smaller than the first movement.

A second movement may be small because a retreat phase may only be configured 200µm - 300µm large such that a blade cannot contact a sample within a pre-defined setting related e.g. to cutting a single sample. However, this may cause the problem that when a second sample should be cut (which may happen on another day, by another user) the device may be reconfigured by adjusting the sample holder and the blade holder closer to each other without recognizing that the device is positioned in a retreat phase. In this case cutting the second sample may lead to a damage of the blade.

In a further embodiment a retreat phase of the second movement only partly overlaps with a degree of freedom of an adjustment of a sample holder and/or a blade holder a such that a potential collision can only occur in the overlapping portion of the retreat phase.

In addition, the dangerous overlapping of sample and blade described above can also occur if a sample is inserted into the sample holder in such a way that it protrudes too far out of the sample holder. Therefore, such an installation can also be indicated by a device according to the first aspect.

An embodiment of the first aspect is related to a device for cutting slices of a sample,
configured to perform the first movement and/or the second movement as periodical movements.

For example, the first movement and the second movement can be super positioned such that a sample holder and/or the blade holder perform a round, elliptical, and/or essentially triangular or rectangular movements relative to each other. In this case the first movement and/or the second movement can be configured as periodical movements, e.g. by moving back and forth. This can in particular be implemented such that a closed (e.g. elliptical) movement is implemented by constantly activating a control element, such as a turning a wheel constantly in a single direction. This coupling can simplify a handling of a device and reduce cognitive load of the user.

An embodiment of the first aspect is related to a device for cutting slices of a sample,
wherein the first movement and the second movement are superimposed by a single actuator.

In case a single actuator is used perform a first and/or a second movement of the sample holder and/or the blade holder relative to each other, a retreat phase can be commanded and/or identified by observing the position of the single actuator. In case the single actuator is a motor, a retreat phase can be identified by observing the movement of the motor and by indicating a retreat phase visually on a screen attached to a device according to the first aspect.

An embodiment of the first aspect is related to a device for cutting slices of a sample,
wherein the second movement is adjusted by a rotating wheel and the retreat phase is indicated for the rotating wheel.

In case the single actuator is a mechanical control element, such as a rotating wheel, a retreat phase can be indicated visually on the respective positions of the turning wheel.

An embodiment of the first aspect is related to a device for cutting slices of a sample,
configured to provide a visual signal, in particular to a microscope and/or a monitor connected to the device.

A visual indication can be provided through goggles and/or a screen of a microscope. In this way a user can perceive the information that the device is in a retreat phase on the same screen the user uses to observe the cutting operation. This can make it more likely that a user perceives the information. Additionally or alternatively, the information that a device according to the first aspect is in a retreat phase can also be provided on an extra screen which is comprised or attached to the device. In one embodiment the device can comprise a small screen, e.g. on the sample holder or on the blade holder, that is configured to provide an information that the device is in a retreat phase. In another embodiment retreat phase information can be displayed on an extra screen. This can in particular be used if no screen is comprised by the device.

An embodiment of the first aspect is related to a device for cutting slices of a sample,
configured to provide an acoustic signal if the device is in the retreat phase.

Additionally or alternatively to a visual indication of a retreat phase, an acoustic signal can be issued if the device is in a retreat phase. Such an acoustic signal can be commanded when the device is in a retreat phase. Additionally or alternatively, such an indication can be issued when the device is started, such that a user will get immediately the information that the device is in a retreat phase and that care has to be taken when staring a cutting operation.

An embodiment of the first aspect is related to a device for cutting slices of a sample,
configured to check if it is in the retreat phase , in case one or more of the following:
   - if a sample has been placed in the sample holder;
   - if a blade has been placed in the blade holder;
   - if a rotating adjustment wheel for commanding the second movement is positioned such that the device moves into the retreat phase ; and
configured to provide an indication signal if at least one of these conditions is true.

A check can be done automatically, e.g. by monitoring a position of a mechanical control element. Additionally or alternatively, a check can be implemented by monitoring directly a position of a sample holder and/or of a blade holder, or by monitoring one or more actuators that move a sample holder and/or a blade holder. A monitoring of these states can be done by respective sensors. However, such a check not necessarily needs to be performed constantly.

Monitoring if a device is in a retreat state if a sample is placed in a sample holder can assured that a user can be made aware of this fact before using the device for a cutting operation. Additionally to a monitoring of a retreat phase it can be monitored if a sample is provided into a sample holder in a correct position and that the block face does not protrude the sample holder too far. Additionally or alternatively, an arrangement of a blade in a blade holder can also cause a retreat phase checking. This would have the same effect as in the embodiment of the previous paragraph. Checking for a retreat phase when a command wheel, which operates the first and/or the second movement, can be another option perform an effective retreat phase check, e.g. for prevent blade damaging.

An indication signal can be a visual, acoustic and/or haptic signal, and be configured to effectively warn a user.

An embodiment of the first aspect is related to a device for cutting slices of a sample,
configured to check if it is in the retreat phase, in case of one or more of the following:
   - during a start procedure;
   - during the first movement, in particular if a first movement is commanded in different directions during a pre-defined time interval; and
configured to provide an indication signal if at least one of these conditions is true.

Monitoring a check during a start procedure can unveil a device being in a retreat phase right before any use of the device. This can in particular be helpful when a user starts a device without knowing in which position the sample holder and/or the blade holder remains from the last usage. A potential damaging use can be inferred if a user commands first movements back and forth in a pre-defined time interval. In case the device is in a retreat state the user will be made aware of this before the user starts a cutting procedure. A potential damage of a blade due to a maladjusted system can therefore be prevented.

An embodiment of the first aspect is related to a device for cutting slices of a sample,
configured to block and/or stop the first movement, based on the indication that the device is in the retreat phase.

A blocking function can relate to a combined movement of a first and a second movement, e.g. if both movements are performed by a single actuator. A blocking can in particular be commanded if a cutting device recognizes that with a current adjustment of a sample holder and a blade holder, a cutting operation could damage a blade of the device. This can be realized by a software that implements a currently adjusted kinematic configuration of the device (i.e. of the sample holder and the blade holder) and analyzes if with the adjusted configuration a damaging of a blade could be possible. This can be done e.g. by simulating the kinematical configuration with one or more samples being attached to the kinematical model of the device. The samples could differ in a length to which a block face of the sample protrudes the sample holder.

An embodiment of the first aspect is related to a device for cutting slices of a sample,
configured to block and/or stop an adjustment of a movement of the blade holder parallel to the second movement, based on the indication that the device is in the retreat phase.

This can prevent a reduction of the distance between a sample holder and a blade holder and thereby a compensation of the safety distance between both parts due to the retreat phase.

An embodiment of the first aspect is related to a device for cutting slices of a sample,
configured to:
- obtain a release signal from a human system interface;
- unblock the first movement based in the release signal.

A release signal for unblocking a first movement can be a mechanism that indicates a correct configuration of a device according to the first aspect such that no damage may occur to a blade. In particular a release signal for the first movement is only commanded if an effective distance between a relief phase position of a sample holder and a blade holder is maintained. A release signal can be e.g. an event signal, a semaphore signal, a condition variable, a dedicated message, or a hardware interrupt.

An unblocking may relate to a general blocking, i.e. a blocking that is always active for a first movement if no release signal is present. Alternatively, a release signal can refer to a specific blocking that blocked a first movement due to a specific condition, in particular due to a condition related to a retreat phase, e.g. as described in the context of the preceding embodiment. Additionally or alternatively, an unblocking of the first movement may relate to a first movement in general or to a specific part of the first movement, in particular a first movement in cutting direction, e.g. in a direction in which a cutting of a blade would occur.

A second aspect of the present disclosure is related to a method for operating a device for slicing a sample,
wherein the device comprises a sample holder and a blade holder which are configured for a movement relative to each other; and
wherein the relative movement comprises:
   - a first movement with a phase during which a sample is cut by a blade of the blade holder; and
   - a second movement with a retreat phase in which the sample holder is moved away from and/or to the blade;
comprising the steps:
   - determining that the device is in the retreat phase;
   - providing an information, in particular a signal and/or a message, that the device is in the retreat phase.

A method according to the second aspect can comprise one or more steps to execute one or more functions of a device according to the first aspect of this disclosure. Steps of a method according to the second aspect of this disclosure can be configured such that thy comprise features of a device according to the first aspect of this disclosure.

### Brief description of the figures

Further advantages and features result from the following embodiments, some of which refer to the figures. The figures do not always show the embodiments to scale. The dimensions of the various features may be enlarged or reduced, in particular for clarity of description. For this purpose the figures are at least partially schematized.
Fig. 1 illustrates microtome systems 100 according to embodiments of this disclosure.
Fig. 2 illustrates an operation of microtomes 200 according to embodiments of this disclosure.
Fig. 3 illustrates an operation of microtomes 300 according to embodiments of this disclosure.
Fig. 4 illustrates microscope systems for embodiments of this disclosure.

In the following description reference is made to the accompanying figures which form part of the disclosure, and which illustrate specific aspects in which the present disclosure can be understood. Identical reference signs refer to identical or at least functionally or structurally similar features.

In general, a disclosure of a described method also applies to a corresponding device (or apparatus) for carrying out the method or a corresponding system comprising one or more devices and vice versa. For example, if a specific method step is described, a corresponding device may include a feature to perform the described method step, even if that feature is not explicitly described or represented in the figure. On the other hand, if, for example, a specific device is described on the basis of functional units, a corresponding method may include one or more steps to perform the described functionality, even if such steps are not explicitly described or represented in the figures. Similarly, a system can be provided with corresponding device features or with features to perform a particular method step. The features of the various exemplary aspects and embodiments described above or below may be combined unless expressly stated otherwise.

### Detailed description

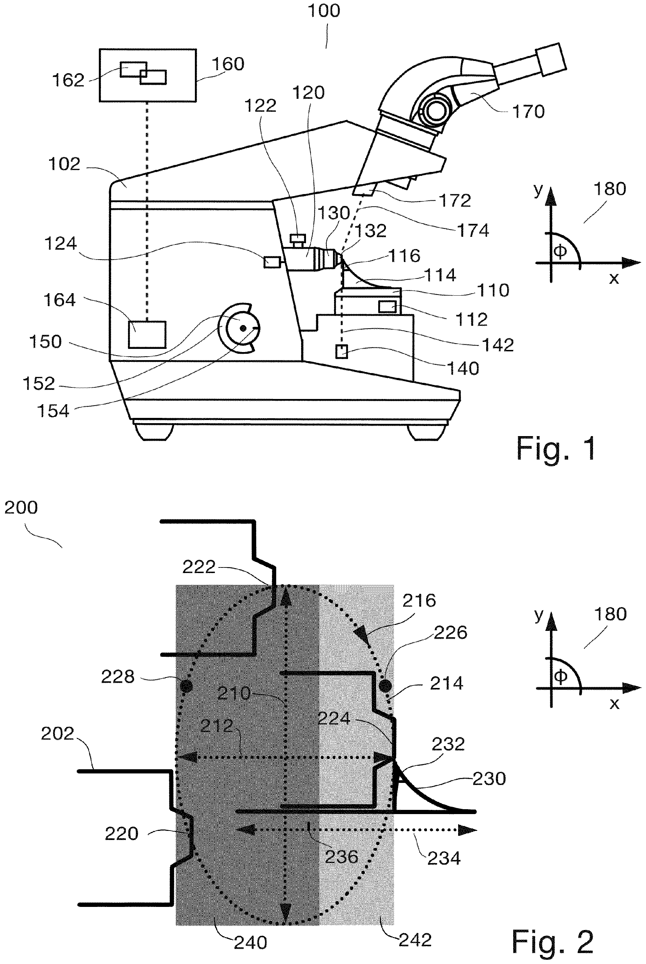

Fig. 1 illustrates a microtome system 100 according to an embodiment of this disclosure. The microtome system 100 comprises a housing 102 in which components of the microtome system are arranged. The microtome 100 comprises a blade holder 110 configured to hold a blade 114. The blade holder is movable in different directions by the actuator system 112. The blade 114 comprises a blade edge 116, which performs the cut and may be made of glass or diamond. Sharpening of a blade made of glass or diamond may be very resource intensive, which is why damaging of a blade, which can occur, when a blade is loaded from a wrong direction, should be avoided.

The microtome 100 comprises a sample holder 120 that can be actuated in at least two translational and two rotational degrees-of-freedom by the actuator systems 122, 124. The sample holder 120 is configured to hold a sample 130. The sample 130 comprises a block face 132 that is a region where a cutting operation should take place. The area of the block face and the blade is illuminated by a light source 140 that emits the light beam 142.

A cutting operation can be controlled by a mechanical element, i.e. the rotating wheel 150. When rotated, the rotating wheel 150 commands the sample holder to perform a first movement in the dimension y of the reference coordinate system 180 and a second movement in the dimension x. The resulting movement has an elliptical shape such that the cutting operation is performed during a downward movement in which sample holder position within the second movement is further right on the y-axis. A retreat phase, in which the blade 114 is distanced from the block face 132 and the second position on the second dimension is further left on the x-axis, is entered during an upward phase of the first movement. A cutting operation can also be controlled independent from a retreat phase motion, e.g. by two different input elements.

The microtome system 100 comprises a microscope 170, which is arranged at the housing 102 and is configured such that a user can look at (and inspect) a block face 132 of a sample 130 and the blade 114. For example, a user might inspect the cutting movement and/or the quality of the knife edge 116, in this way. The light, generated by the illumination 140 by illuminating the (physical) gap between the sample 130 (or its block face 132) and the blade 114 (or its edge 116) is detected by the detector 172 of the microscope 170. This might require appropriate arrangement and/or orientation of the detector 172.

Also, the microscope 170 might be arranged and/or oriented such that this light gap is visible by means of the microscope 170. Therefore, die microscope 170 can be configured such that it can be repositioned with respect to the visual axis 174. The repositioning can in particular be performed along an angle φ of the coordinate system 180. The microscope 170 can be an optical microscope, a fluorescence microscope, a confocal microscope, etc. In an embodiment, the detector 172 can be external to the microscope 170 and only configured to exchange information with the microscope 170.

The microtome system 100 further comprises a display 160, on which information about a cutting process and/or indications 162 for the alignment of the blade 114 with the block face 132 of the sample 130 can be displayed to the user. In an embodiment, the microtome system 100 is also configured to render a user interface or graphical user interface, in particular, by using the display 160 or by exchanging information with a corresponding device.

One possibility to indicate that the microtome is in a retreat phase is related to the rotary wheel 150. Through the rotary wheel 150, a user commands the first movement and the second movement as described above. This is done, e.g. by a software that transforms the positions of the rotary wheel 150 to respective positions of the first and the second movement, e.g. controlled by the actuator systems 122, 124. The actual position of the rotary wheel 150 is indicated by the marking 152. Hence, the retreat phase can be passively visualized at the rotary wheel 150. This is done by the marking 154. If the position marking 152 is within the marking 154, then the system is in the retreat phase. The position marking 152 can be e.g. a red marking and it can cover e.g. 25 - 40% of the rotating wheel or more according to the corresponding retreat phase. Active visualizations are also possible, e.g. depending on a state of one or more of the actuator systems a retreat phase can be actively indicated by sending a message (that can be displayed on a visual screen) or by signaling a retreat phase, e.g. visually, acoustically and/or haptically.

In the displayed embodiment, e.g. the rotary wheel can vibrate if the system is in a retreat phase. The vibration can in particular be performed if the device 100 is activated. Thereby, it can be indicated actively to a user that the device was left in a retreat phase in a previous usage. Additionally or alternatively, this kind of active indication can also be performed if a new sample has been placed in the sample holder and/or if the blade holder has been adjusted and/or a new blade has been mounted on a blade holder. Thereby, a user can be made actively aware of the fact that the device 100 is still in a retreat phase albeit important parameter had been changed such that a possibly damaging operation can occur.

Another active retreat phase indication can be provided if within a retreat phase, a user starts rotating the rotary wheel 150 back and forth. This indication can also be provided by a message, visually, acoustically, and/or haptically. A first movement, in particular in cutting direction, can also be prevented, e.g. by a software function, if it is recognized that a user is in a retreat phase. This can e.g. be beneficial for systems 100 in which the first and the second movement can be commanded independently. Additionally or alternatively, an automatic alignment of a sample (or a sample holder) to a blade (or a blade holder) can also be prohibited (e.g. by a software function) as long as if a device 100 is in a retreat phase and/or if no explicit approval by a user has been registered.

Fig. 2 illustrates an operation of a microtome 200 according to an embodiment of this disclosure. In this embodiment a first movement 210 and a second movement 212 are performed by a sample holder (not depicted), e.g. by actuator systems similar to the actuator systems 122, 124 described in relation to Fig. 1. Thereby, the sample holder moves a sample 202 relative to a blade 230.

The microtome 200 comprises a blade holder (not depicted) with a blade 230. The blade comprises a blade edge 232 and is therefore configured similarly as the blade 114 of the embodiment described in relation to Fig. 1. The blade holder is adjustable in a direction 234 parallel to the second movement 212, i.e. parallel to the dimension x of the coordinate system 180. The blade holder can be adjusted until a mechanical end stop at position 236. During the movement of the sample holder 202, the blade holder, i.e. the blade 230 is fix and does not move.

When moved along the first dimension 210 and the second dimension 212, the sample holder 202 can move periodically around an ellipse 214. The movement is commanded in a single direction 216 only such that a cutting of a sample by the blade edge 232 is only performed in a motion from above towards the blade edge 232. Hence, a block face of the sample is moved periodically through the position sequence 220, 222, 224, wherein a cutting of a block face 220 of the sample 202 is performed at position 224. In this way it can be assured that the sensitive blade edge 232 cannot be damaged.

During normal cutting operation, the sample holder periodically performs the elliptic motion 214 thereby covering an area 242. A retreat phase is indicated by area 240, i.e. all positions on the ellipse 214 that are within area 240 are defined as retreat phase. In the retreat phase 240 the sample cannot contact the blade and therefore it is assured that the blade is not approached/contacted from a direction which would damage the blade 232.

However, e.g. between to different analyses, it can happen that a user who conducted a first analysis left the sample holder of the device somewhere in the retreat phase 240. A different user does not recognize the state of the device and thinks the sample holder is in position 226, where in fact the sample holder is in position 228. This can happen since the second movement normally covers only a small length and is depicted in an exaggerated way for explanation purposes. The second user adjusts the blade such that the blade is positioned within the retreat area 240, without appropriately adjusting the sample holder (means for adjusting the sample holder are not depicted but can be similar to 234). When starting a cutting operation in the described circumstances, the blade 230 will cut far deeper into the sample 202 as intended by the second user. This might also damage the sensitive blade edge 232 with the same severe consequences as described above.

In order to prevent such an operation of the microtome or similar faulty/risky operations that could damage the blade, it is indicated if the microtome is in a retreat phase. Then a user who is not aware that the device is in a retreat phase can be made aware of this. This can e.g. be done by indicating retreat phase positions at a manual control element such as described in relation to Fig. 1. Additionally or alternatively, a message and/or a signal can provide to a user, e.g. a message to be displayed on a screen 160 or an auditive and/or haptic signal. Such a message/signal can in particular be issued when the microtome is activated/initialized for a new analysis. Additionally, a retreat phase signal can block a first movement, such that no cutting operation can be performed before the device is moved out of the retreat phase and/or before explicit approval had been provided by a user that a cutting operation can commence.

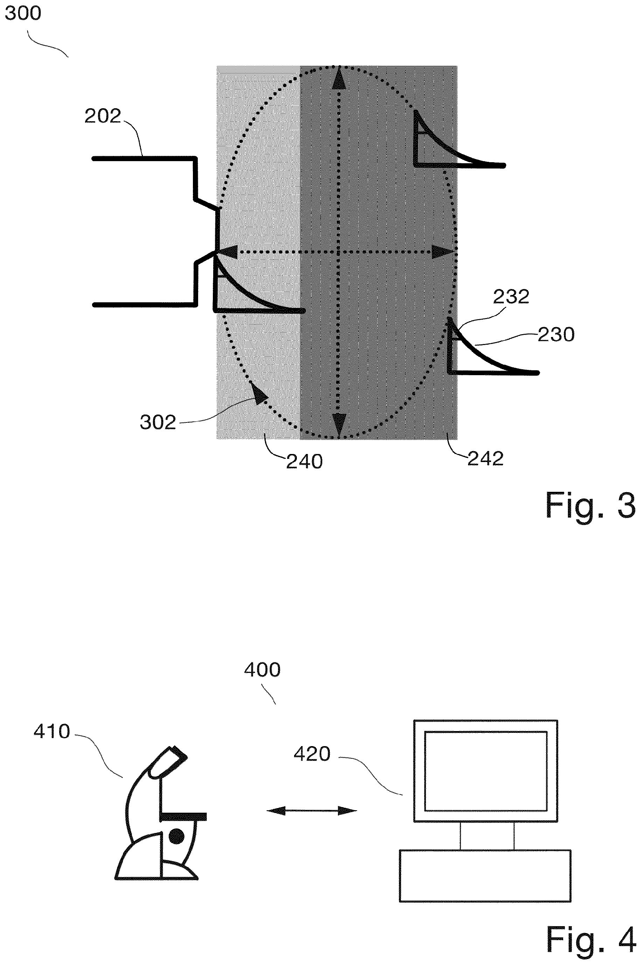

Fig. 3 illustrates an operation of a microtome 300 according to an embodiment of this disclosure. The embodiment is similar to the embodiment described in relation to Fig. 2 but the first and the second movement is performed by the blade 230. The blade 230 performs an elliptic movement 302. The sample holder and/or the sample do not change position during a cutting operation. For this embodiment similar problems as described in relation to Fig. 2 can occur and lead to a costly damage of the blade 230. Therefore, it is indicated e.g. by a visual, haptic or auditive signal and/or a message if the device is (or has been left) in the retreat phase 242.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to a microscope comprising a system as described in connection with one or more of the Figs. 1 to 3. Alternatively, a microscope may be part of or connected to a system as described in connection with one or more of the Figs. 1 to 3. Fig. 4 shows a schematic illustration of a system 400 configured to perform a method described herein. The system 400 comprises a microscope 410 and a computer system 420. The microscope 410 is configured to take images and is connected to the computer system 420. The computer system 420 is configured to execute at least a part of a method described herein. The computer system 420 may be configured to execute a machine learning algorithm. The computer system 420 and microscope 410 may be separate entities but can also be integrated together in one common housing. The computer system 420 may be part of a central processing system of the microscope 410 and/or the computer system 420 may be part of a subcomponent of the microscope 410, such as a sensor, an actor, a camera, or an illumination unit, etc. of the microscope 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a microscope or a microscope component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random-access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device, or the like. The apparatus or system may, for example, comprise a file server for transferring the computer program to the receiver.

In some embodiments, a programmable logic device (for example, a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

### List of reference signs

- 100: microtome system
- 102: housing
- 110: blade holder
- 112: actuator system
- 114: blade
- 116: blade edge
- 120: sample holder
- 122: actuator system
- 124: actuator system
- 130: sample
- 132: block face
- 140: light source
- 142: light beam
- 150: rotating wheel
- 152: wheel position marking
- 154: retreat phase marking
- 160: display
- 162: displayed information
- 170: microscope
- 172: detector
- 174: visual axis
- 180: coordinate system
- 200: operation of microtome
- 202: sample
- 210: of first movement
- 212: second movement
- 214: sample holder movement
- 216: sample holder movement direction
- 220: block face
- 222: sample position
- 224: cutting position
- 226: assumed position
- 228: real position
- 230: blade
- 232: blade edge
- 234: blade holder adjustment
- 236: blade stop dog
- 240: retreat phase area
- 242: movement coverage
- 300: operation of microtome
- 302: elliptic blade movement

## Claims

1. Device (100) for cutting slices of a sample, in particular a microtome, comprising:
- a sample holder (120) configured to hold a sample (130) to be cut and to move the sample in one or more directions (x, y);
- a blade holder (110) configured to move a blade (114) in one or more directions to cut the sample;
wherein the device (100) is configurable or configured to:
- move the sample holder relatively to the blade holder in a first movement (210) that comprises a phase in which the sample is cut by the blade; and
- move the sample holder relatively to the blade holder in a second movement (212) that comprises a retreat phase (240) in which the sample holder is moved away from and/or to the blade;
wherein both movements are executed to cut the sample in a pre-defined direction; and
wherein the device indicates (152) if the device is in the retreat phase.

2. The device according to the preceding claim,
wherein the sample holder (120) is configured to be actuated manually and/or electrically and thereby to perform the first movement (210) and/or the second movement (212).

3. The device according to one of the preceding claims,
wherein the second movement (212) is essentially perpendicular to the first movement (210).

4. The device according to one of the preceding claims,
wherein the second movement (212) is smaller than the first movement (210).

5. The device according to one of the preceding claims,
configured to perform the first movement (210) and/or the second movement (210) as periodical movements.

6. The device according to one of the preceding claims,
wherein the first movement (210) and the second movement (210) are superimposed by a single actuator.

7. The device according to one of the preceding claims,
wherein the second movement (212) is adjusted by a rotating wheel (150) and the retreat phase (240) is indicated (152) for the rotating wheel.

8. The device according to one of the preceding claims,
configured to provide a visual signal, in particular to a microscope (170) and/or a monitor (160) connected to the device.

9. The device according to one of the preceding claims,
configured to provide an acoustic signal if the device is in the retreat phase (240).

10. The device according to one of the preceding claims,
configured to check if it is in the retreat phase (240), in case one or more of the following:
- if a sample (130) has been placed in the sample holder;
- if a blade (114) has been placed in the blade holder (110);
- if a rotating adjustment wheel (150) for commanding the second movement (212) is positioned such that the device moves into the retreat phase (212); and
configured to provide an indication signal if at least one of these conditions is true.

11. The device according to one of the preceding claims,
configured to check if it is in the retreat phase, in case of one or more of the following:
- during a start procedure;
- during the first movement (210), in particular if a first movement is commanded in different directions during a pre-defined time interval; and
configured to provide an indication signal if at least one of these conditions is true.

12. The device according to one of the preceding claims,
configured to block and/or stop the first movement (210), based on the indication that the device is in the retreat phase (240).

13. The device according to one of the preceding claims,
configured to block and/or stop an adjustment of a movement of the blade holder parallel to the second movement (212), based on the indication that the device is in the retreat phase (240).

14. The device according to the preceding claim,
configured to:
- obtain a release signal from a human system interface;
- unblock the first movement (210) based in the release signal.

15. A method for operating a device (100) for slicing a sample, in particular a microtome,
wherein the device comprises a sample holder (130) and a blade holder (110) which are configured for a movement relative to each other; and
wherein the relative movement comprises:
- a first movement (210) with a phase during which a sample is cut by a blade of the blade holder; and
- a second movement (212) with a retreat phase (240) in which the sample holder is moved away from and/or to the blade;
comprising the steps:
- determining that the device is in the retreat phase;
- providing an information, in particular a signal and/or a message, that the device is in the retreat phase.
